# EUROPÄISCHE PATENTANMELDUNG

(11) **EP 4 520 991 A1**
(43) Veröffentlichungstag der Anmeldung: **12.03.2025**
(21) Anmeldenummer: 24188464.2
(22) Anmeldetag: 12.07.2024
(51) Int. Cl.: F16D 55/2255, F16C 33/30, F16D 65/18

(54) **SCHWENKLAGER, SCHWENKHEBELANORDNUNG UND ZUSPANNANORDNUNG**

(30) Priorität: 08.09.2023 DE 102023124318
(71) Anmelder: KNORR-BREMSE Systeme für Nutzfahrzeuge GmbH, 80809 München (DE)
(72) Erfinder: Hidringer, Michael, 94577 Winzer (DE); Beck, Thomas, 94154 Neukirchen vorm Wald (DE); Petschke, Andreas, 94127 Neuburg am Inn (DE); Stöger, Christian, 94486 Osterhofen (DE); Hauser, Maximilian, 94081 Fürstenzell (DE); Wolfgang, Pritz, 80637 München (DE); Weber, Ralf, 80997 München (DE)

(57) **Zusammenfassung**

Ein Schwenklager (1) zur Lagerung eines Schwenkhebels (30) einer Zuspannvorrichtung (50) einer Scheibenbremse, wobei das Schwenklager (1) eine bogenförmige Lagerschale (16) und einen darauf verschwenkbar-geführte Wälzlagerkäfig (2) aufweist, wobei der Wälzlagerkäfig (2) zumindest einen axial zur Schwenkachse (A) hervorstehenden Führungsflügel (21) aufweist, welcher lediglich einseitig eine sich axial-erstreckende Anschlagfläche (10) zur Rückführung des Wälzkörperkäfigs (2) aufweist; und eine Schwenkhebelanordnung und eine Zuspannvorrichtung.

## Beschreibung

Die vorliegende Erfindung betrifft ein Schwenklager nach dem Oberbegriff des Anspruchs 1, sowie eine Schwenkhebelanordnung und eine Zuspannvorrichtung.

Aus dem Stand der Technik sind Schwenklager beispielsweise aus der DE 10 2004 031 792 A1 oder auch aus der EP 3 129 668 B1 bekannt und entsprechende Schwenkhebelanordnungen aus der EP 3 112 718 A1.

Die DE 10 2020 101 014 B3 offenbart ebenfalls eine Schwenklageranordnung mit einem Rückführorgan und einem Rückführgegenorgan, welche über einen Flügelabschnitt und einen Nutabschnitt miteinander verbunden sind, wobei der Flügelabschnitt in der Nut einliegt. Ein solcher Nutabschnitt muss allerdings aufwendig an den Schwenkhebel angebracht werden.

Ausgehend davon ist es Aufgabe der vorliegenden Erfindung eine einfachere und damit auch leichter-herstellbare Rückführung zu realisieren.

Die Erfindung löst diese Aufgabe durch den Gegenstand des Anspruchs 1.

Erfindungsgemäß ist ein Schwenklager zur Lagerung eines Schwenkhebels einer Zuspannvorrichtung einer Scheibenbremse, wobei das Schwenklager eine bogenförmige Lagerschale und einen darauf verschwenkbar-geführte Wälzlagerkäfig aufweist.

Der Wälzlagerkäfig weist einen axial zur Schwenkachse hervorstehenden Führungsflügel auf. Dieser Führungsflügel weist allerdings lediglich einseitig eine sich axial-erstreckende Anschlagfläche zur Rückführung des Wälzkörperkäfigs auf.

Die einseitige Rückführung beruht im Gegensatz zum vorgenannten Stand der Technik auf der Erkenntnis, dass eine beidseitige Rückführung nicht zwingend notwendig ist, zumal das Schwenklager zusätzlich einen Anschlagstopp aufweist, welcher ein Überschwenken des Lagers verhindert.

Es ist von Vorteil, wenn die Anschlagfläche als Kante des Führungsflügels ausgebildet ist. Dadurch kann der Anschlag des Führungsflügels dauerhaft stabil gewährleistet werden.

Weiterhin vorteilhaft wenn die der Anschlagfläche entgegengesetzten Kante des Führungsflügels als Flügelversteifung mit bogenförmigen Längsverlauf ausgebildet ist. Dadurch wird einer Verformung des Führungsflügels zusätzlich entgegengewirkt. Zugleich kann der Führungsflügel geringer dimensioniert werden.

Die Lagerschale kann vorteilhaft als Blechstreifen ausgebildet sein, wobei die Lagerschale über einen durchgängigen Bereich von mehr als 80% seiner Längsersteckung in einer Bogenebene verläuft. Dadurch wird ein besonders flaches Schwenklager mit geringem Bauraumbedarf geschaffen.

Die Lagerschale ist vorteilhaft mit dem Wälzkörperkäfig verrastet.

Bevorzugt weist der Wälzkörperkäfig eines oder mehrere Rastelemente, insbesondere eines oder mehrere federnde Rastleisten, auf, welche mit einem korrespondierenden Rastelement der Lagerschale, insbesondere einer oder mehrerer Vertiefungsrillen, verrastet ist. Die Verrastung kann vorteilhaft für die Kräfteverteilung an beiden Längsseiten der Lagerschale erfolgen.

Der Führungsflügel kann vorteilhaft einstückig mit dem Wälzkörperkäfig ausgebildet sein, so dass er besondere Festigkeit besitzt.

Der Wälzkörperkäfig Lagertaschen zur Lagerung von Wälzkörpern, insbesondere von Lagernadeln, aufweist, wobei die Lagertaschen Haltestege zur Halterung der Wälzkörper aufweist, welche lediglich einseitig an einer Lagertasche angeordnet sind. Dies ermöglicht ein einfaches rückseitiges Einsetzen der Wälzkörper ins Nadellager.

Weiterhin erfindungsgemäß ist eine Schwenkhebelanordnung umfassend einen Schwenkhebel und ein Schwenklager, vorzugsweise ein erfindungsgemäßes Schwenklager, wobei das Schwenklager eine bogenförmige Lagerschale und einen darauf verschwenkbar-geführte Wälzlagerkäfig aufweist.

Der Wälzlagerkäfig weist einen axial zur Schwenkachse hervorstehenden Führungsflügel auf, mit einer Anschlagfläche, welche gemeinsam mit einem am Schwenkhebel ausgebildeten korrespondierenden Rückführungselement einen lediglich einseitigen Anschlag zur Rückführung des Wälzlagerkäfigs aufweist.

Die Erkenntnis, wonach ein einseitiger Anschlag zur Rückführung genügt, ermöglicht eine deutliche konstruktive Vereinfachung der Schwenkhebelanordnung im Vergleich zum Stand der Technik.

Zur verbesserten Eigenstabilität gegen Deformation ist es von Vorteil, wenn das Rückführungselement als ein zunehmend verjüngender radialer Vorsprung ausgebildet ist.

Besonders bevorzugt ist das Rückführungselement eine zur Verjüngung hin geschwungen auslaufende Kontur, welche eine Führung des Führungsflügels entlang des Rückführelements bis zur Endposition des Anschlags erlaubt. Ein Überlaufen oder Festfahren des Führungsflügels am Rückführungselement hat sich überraschend nicht eingestellt.

Das Rückführungselement kann vorteilhaft am Ende einer Führungsfläche zur Führung des Schwenkhebels innerhalb eines Bremssattels angeordnet sein und vorzugsweise einstückig, insbesondere monolithisch, mit dem Rest des Schwenkhebels ausgebildet sein.

Besondere Vorteile im Herstellprozess ergeben sich, wenn das Rückführungselement als Fräsauslauf ausgebildet ist. Ein Fräsauslauf ist für den Fachmann einfach zu identifizieren. Er befindet sich am Ende einer mechanisch bearbeiteten Fläche. Anhand von dabei ausgebildeten entsprechenden Oberflächenprofilierungen ist die Nachbearbeitung ohne Weiteres erkennbar.

Zuspannvorrichtung einer Scheibenbremse umfassend einen Bremssattel und eine Schwenkhebelanordnung nach einem der vorhergehenden Ansprüche, welche sich in einer Kontur im Bremssattel abstützt.

Die vorgenannte Führungsfläche als Teil des Schwenkhebels kann vorteilhaft Teil eines Führungshorns oder benachbart zu diesem angeordnet ist, welches bei Ausführen der Schwenkbewegung in eine Ausnehmung innerhalb des Bremssattels eintaucht. Somit übernehmen die Führungsflächen die Führung innerhalb der Ausnehmung.

Jede Seite des Schwenkhebels kann vorteilhaft lediglich eine seitliche Abstützung der Lagerschale im Bremssattel aufweisen, wobei die Anordnung der Abstützpunkte diagonal zueinander angeordnet sind.

Nachfolgend wird ein erfindungsgemäßes Schwenklager, eine erfindungsgemäße Schwenkhebelanordnung und eine erfindungsgemäße Zuspannvorrichtung unter Zuhilfenahme der beiliegenden Figuren näher erläutert. Es zeigen:
- Fig. 1: eine Rückansicht auf ein erfindungsgemäßes Schwenklager der vorangegangenen Figuren;
- Fig. 2: eine Seitenansicht auf das Schwenklager;
- Fig. 3: eine erste Perspektivansicht auf das Schwenklager;
- Fig. 4: eine zweite Perspektivansicht auf das Schwenklager;
- Fig. 5: eine Perspektivansicht auf einen Wälzkörperkäfig des Schwenklagers der vorangegangenen Figuren;
- Fig. 6a: eine Draufsicht auf einen Schwenkhebel zur Aufnahme des Schwenklagers;
- Fig. 6b: eine seitliche Schnittansicht auf den Schwenkhebel der Fig. 6a;
- Fig. 7: eine Perspektivansicht des Schwenkhebels der Fig. 6a und 6b;
- Fig. 8a: eine Draufsicht auf eine erfindungsgemäße Schwenkhebelanordnung;
- Fig. 8b: eine seitliche Schnittansicht auf die Schwenkhebelanordnung der Fig. 8a;
- Fig. 9: eine Perspektivansicht der Schenkhebelanordnung der Fig. 8a und 8b;
- Fig. 10: eine Schnittdarstellung einer erfindungsgemäßen Zuspannvorrichtung; und
- Fig. 11: die Schnittansicht der Fig. 10 mit demontiertem Schwenkhebel.

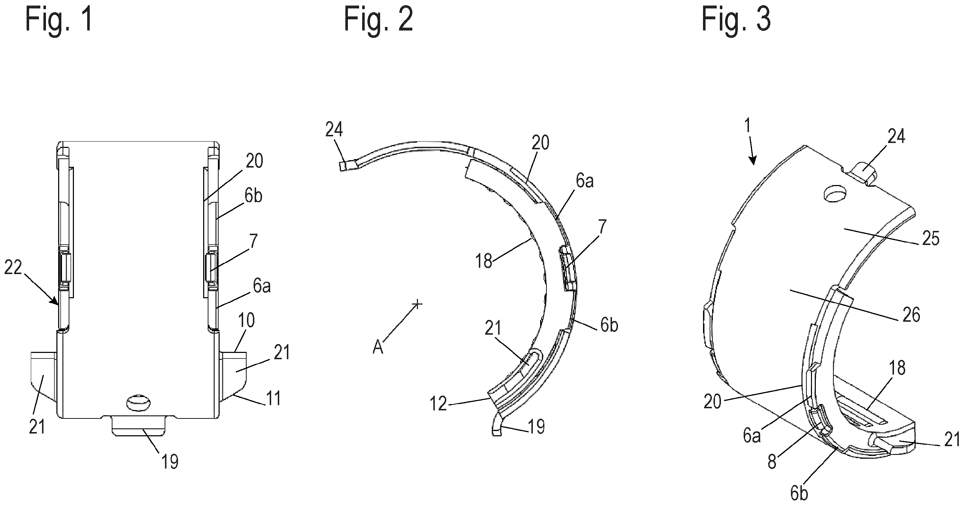

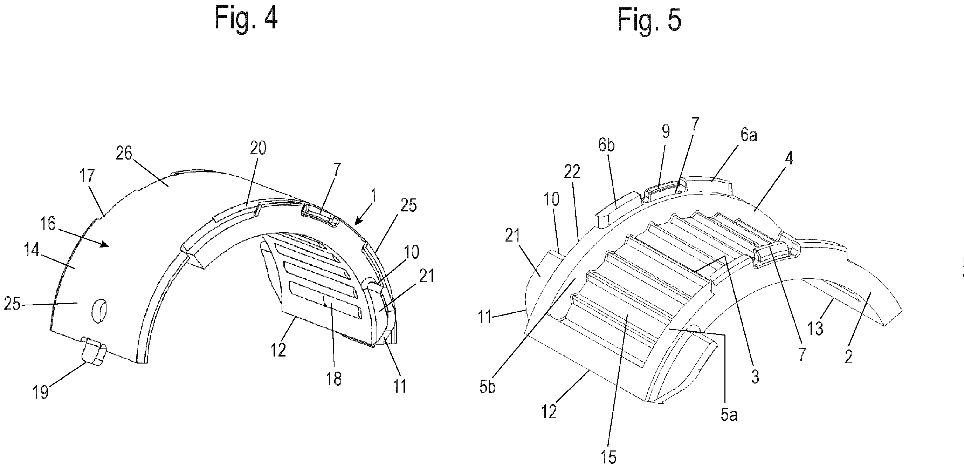

Fig. 1-5 zeigt detailliert das Schwenklager 1 in der Ausgestaltung als Nadellager für eine Scheibenbremse, welches insbesondere zur Lagerung des vorbeschriebenen Schwenkhebels, welcher synonym auch als Drehhebel oder Bremshebel bezeichnet wird, z.B. am Bremssattel 51 einer Scheibenbremse einsetzbar ist, wie sie z.B. unter den Produktbezeichnungen SN6 oder SN7 oder aber in ähnlicher Bauart z.B. aus der DE 4204307 A (siehe dort das Rollenlager 3) oder der DE 197 31 696 A bekannt ist. Bzgl. des ansonsten hier nicht weiter zu erörternden Aufbaus derartiger Scheibenbremsen wird vollinhaltlich auf diese Schriften Bezug genommen. Das Schwenklager 1 weist eine Schwenkachse A auf.

Das in Fig. 1-5 dargestellte als Nadel- bzw. Rollenlager ausgebildete Schwenklager 1 weist eine kreisbogenförmige Lagerschale 16 und einen demgegenüber verschwenkbaren Wälzkörperkäfig 2 auf, zwischen denen ein Satz von Wälzkörpern 18, hier in Form von Lagernadeln angeordnet ist, derart, dass der Lagerschale 16 relativ zum Wälzkörperkäfig 2 beweglich wälzkörpergelagert, insbesondere rollengelagert, ist.

Der Wälzkörperkäfig 2 kann vorzugsweise aus Kunststoff bestehen und ist mit zwei senkrecht zum Wälzkörperkäfig nach außen ausgerichteten seitlichen Seitenborden 5a, 5b mit zu den Lagernadeln 18 gerichteten Führungsflächen versehen. Die gegenüberliegende Seitenborde 5a, 5b definieren gemeinsam mit zwei gegenüberliegenden Endborden, die jeweils die stirnseitigen Endflächen 12 und 13 des Wälzkörperkäfigs aufweisen, einen Aufnahmeraum für die Lagernadeln 18. Der Aufnahmeraum wird in Lagertaschen 4 unterteilt, welche einseitig durch parallel zur Schwenkachse A zwischen den Seitenborden 5a, 5b verlaufende Haltestege 3 definiert werden. Die Haltestege 3 verhindern das innenseitige Herausfallen der Wälzkörper18, z.B. der Lagernadeln, in radialer Richtung bei der Montage des Schwenklagers 1. Rückseitig wird das Herausfallen durch die Lagerschale 16 verhindert.

Von den Seitenborden 5a, 5b erstecken sich parallel dazu Führungsmittel 6a und 6b, beispielsweise als bogenförmige Vorsprünge. Die Führungsmittel 6a und 6b erstrecken sich in Richtung der Lagerschale 16 und fassen diese seitlich u-förmig ein. Zusätzlich zu den aus einer Seitenborde 5a, 5b hervorstehenden Führungsmitteln 6a und 6b, steht ein Rastelement 7, beispielsweise eine Rastleiste 9, aus der Seitenborde 5a, 5b hervor, welche die Lagerschale 16 hintergreift und damit mit dem Wälzkörperkäfig verrastet.

Die Lagerschale 16 weist hierfür als korrespondierende Rastmittel entlang der Kantenflächen Vertiefungsrillen 20 auf, in die Rastleiste 9 eingreift.

Von der Außenfläche 22 der Seitenborde 5a, 5b steht jeweils zumindest ein Führungsflügel 21 in axialer Richtung (bezogen auf die Schwenkachse A) hervor. Dieser Führungsflügel 21 zeichnet sich durch lediglich eine Anschlagfläche 10 in axialer Erstreckung auf. Hier kann ein korrespondierendes Rückführungselement 34 des Brems- bzw. Schwenkhebels 30 an. Die der Anschlagfläche 10 entgegengesetzte Kante ist als bogenförmige Flügelversteifung 11 ausgebildet und ermöglicht durch die Bogenform keinen positionsgenauen und wiederholbaren Anschlag des vorgenannten Rückführungselements 34. Die Anschlagfläche 10 erlaubt indes die Mitführung des Wälzkörperkäfigs in eine Schwenkrichtung, während das Führen in die Gegenrichtung durch einen anderen Anschlag, z.B. gegen die Endfläche 12 oder dergleichen erfolgen kann. Ein Vorteil ist die deutlich geringere Gefahr eines mechanischen Verformens des Führungsflügels, durch die verringerte mechanische Belastung und durch die Flügelversteifung 11.

Die Lagerschale 16 kann aus einem ebenen Metallblech gefertigt, welches zu einem Zylinderabschnitt bzw. in eine Kreisbogenform gebogen wurde. Diese ist aufgrund der Materialwahl tribologisch unempfindlich. Erweist an seinen Seiten zwei mittige Aussparungen 17, insbesondere Taillierungen, auf, in welche die Rastleisten 9 des Wälzkörperkäfigs eingreifen, wobei die Taillierungen 17 eine derartige Erstreckung aufweisen, dass der Wälzkörperkäfig 2 in den Taillierungen 17 der Lagerschale 16 begrenzt beweglich geführt ist, so dass die Aussparungen 17 einerseits in einfacher Weise die Funktion von bewegungsbegrenzenden Anschlägen übernehmen und andererseits der Lagerschale 16 am Wälzkörperkäfig 2 gut führen und in der Einbausituation halten. Die Vertiefungsrillen 20 weisen dabei zumindest eine ebenso lange oder längere kreisbogenförmige Erstreckung auf wie die Taillierungen 17.

Aufgrund der Taillierungen ist die Lagerschale in zwei bogenförmige Endsegmente 25 und in ein ebenfalls bogenförmiges Mittelsegment 26 unterteilt.

Befestigungseinrichtungen wie Nasen 19, 24 und/oder Bohrungen fixieren den Wälzkörperkäfig 2 und/oder den Lagerschale 16 an den jeweils zugehörigen relativ zueinander beweglich zu lagernden Bauteilen wie dem Bremssattel 51 und dem Schwenkhebel 30 der Scheibenbremse.

Der Wälzkörperkäfig 2 aus Kunststoff weist eine mittige Aussparung 15 auf, mit mehreren aussparungsartigen Lagertaschen 4 zur Aufnahme von einem, vorzugsweise je zwei, der Wälzkörper 18 jeweils in der Form als Lagernadel auf. Der Lagerschale 16 besteht dagegen aus einem Metallblech, das bis auf die Nasen 19, 24 nur in einem einzigen Biegeprozess auf einfache Weise herstellbar ist, so dass das erfindungsgemäße Schwenklager ohne jede Funktionsbeeinträchtigung deutlich kostengünstiger herstellbar ist als vergleichbare Schwenklager.

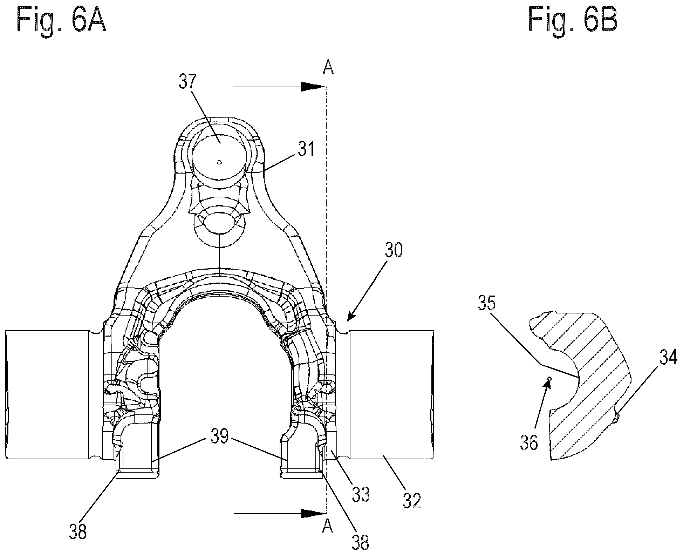

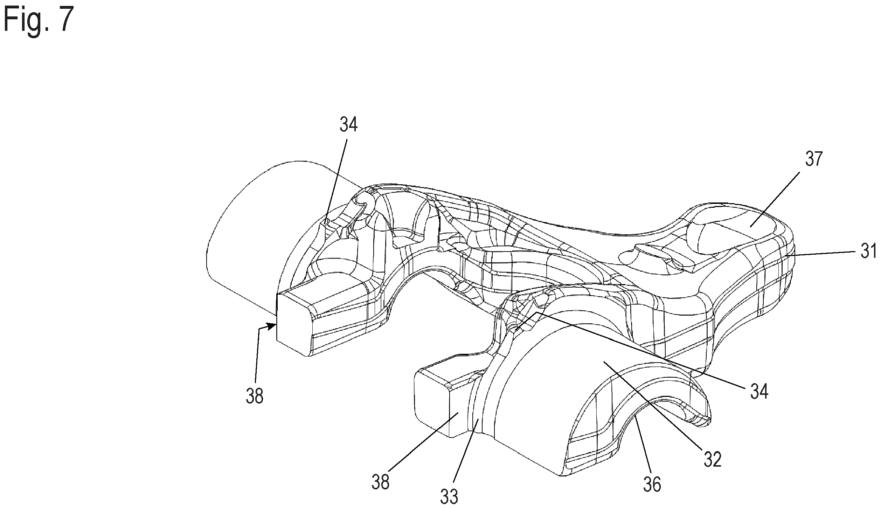

Fig. 6a, 6b und 7 zeigen einen Schwenkhebel 30, welcher ausgebildet ist zur Anordnung zweier vorbeschriebener Schwenklager. Daher weist der Schwenkhebel ein Hebelelement 31 und mit einer endständigen kalottenförmigen Aufnahme 37 zur Aufnahme eines nicht-dargestellten Stößels z.B. eines Pneumatik-Zylinders. Weiterhin weist der Schwenkhebel 30 zwei flügelförmige Lagerbacken mit jeweils einer Lagerfläche 32 zur Lagerung jeweils eines der Schwenklager 1 auf.

Dabei definiert der Schwenkhebel 30 eine Drehachse 36, welche durch eine Innenlagerfläche 35 zur schwenkbaren Lagerung auf einem Achsschenkel im Inneren eines Bremssattels 51 und welche coaxial zur Schwenkachse A des Schwenklagers 1 liegt.

Benachbart zu der Lagerfläche 32 weist der Schwenkhebel eine Laufbahn 33 auf, entlang welcher der Führungsflügel 21 verläuft. Benachbart zu dieser Laufbahn 33 ist jeweils eine Führungsfläche 38, welche seitlich an einem Führungshorn 39 angeordnet ist und welche sich parallel lediglich über einen Teilbereich der Bogenform der Lagerfläche 32, vorzugsweise zwischen 20-70% der Bogenform erstreckt.

Die Führungsfläche läuft an einem Rückführungselement 34 als korrespondierender Anschlag zum Führungsflügel 21 aus. Der Schwenkhebel 30 weist zudem weitere funktionale Elemente auf, welche allerdings im Kontext der Lagerung und der Anordnung des Schwenklagers keine vorrangige Bedeutung haben.

Um die besagten Führungsflächen 38 bereitzustellen kann eine materialabhebende Bearbeitung eines bereitgestellten Schwenkhebels, z.B. als Schmiedeteil oder als Gussteil oder dergleichen, erfolgen, so dass der Schwenkhebel in Ausbildung nach Fig. 6a, 6b und 7 bereitgestellt wird.

Die Ausbildung der Führungsflächen 38 der Führungshörner 39 kann beispielsweise durch ein Schleif- oder Fräsvorgang, insbesondere durch Zirkularfräsen erfolgen.

Dabei bleibt typischerweise ein Fräsauslauf zurück, welcher durch Nachbearbeitung entfernt werden muss. Dieser Fräsauslauf ist im vorliegenden Fall das Rückführungselement 34. Somit ist das Rückführungselement ein radialer Vorsprung mit geschwungener Kontur, welcher aufgrund seiner Art als Fräsauslauf vom Ansatz an bis zu seiner Oberkante sich zunehmend verjüngt. Wie sich zudem überraschend gezeigt hat, fährt sich der Führungsflügel 21 an dieser Art des Rückführungselements nicht fest. Vielmehr wird das Rückführungselement durch die allmähliche Verjüngung in radialer Richtung zusätzlich gegen Verformung stabilisiert.

Wie sich bereits aus Fig. 1-7 erkennbar ist, erfolgt der Anschlag zwischen dem Rückführungselement 34 und dem Führungsflügel 21 lediglich einseitig.

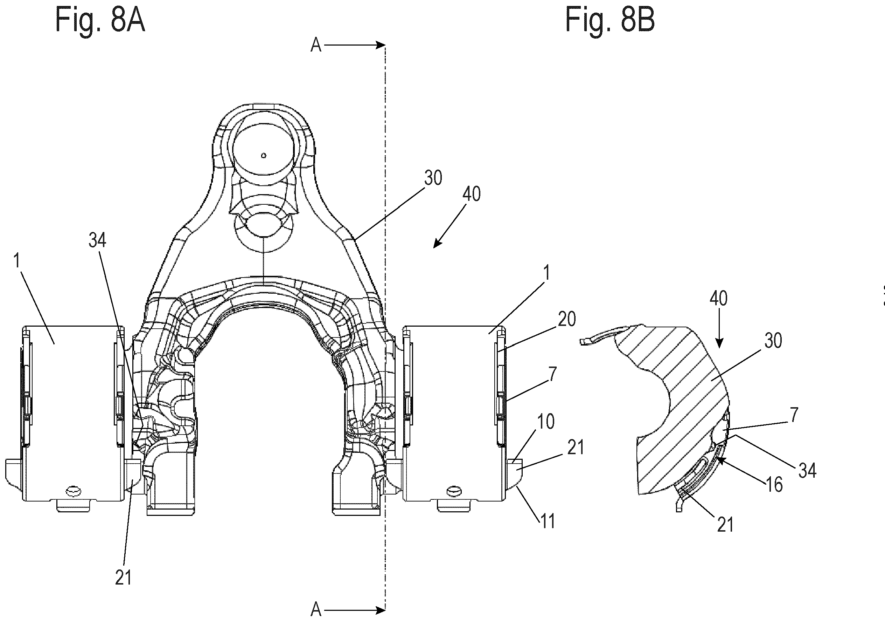

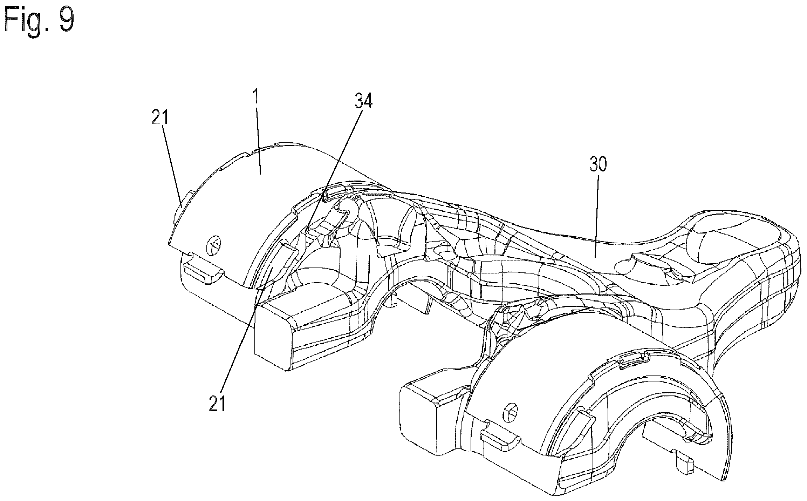

Fig. 8a, 8b und 9 zeigen diesen einseitigen Anschlag im Detail. Die dargestellte erfindungsgemäße Schwenkhebelanordnung 40 aus dem Schwenkhebel 30 und dem Schwenklager 1 ist derart ausgebildet, dass der Schwenkhebel 30 durch das Schwenklager 1 verschwenkbar auf einem festen Gegenlager positionierbar ist. Während die Verschwenkbarkeit durch die Verrastung zwischen dem Rastmittel 7 und der korrespondierenden Vertiefungsrille 20 und deren Länge begrenzt. Ein Endanschlag wird zudem nicht in jedem Fall erreicht, da der Käfig der Schwenkbewegung des Schwenkhebels nacheilen kann.

Das Rückführungselement 34 dient im Zusammenspiel mit dem Schwenkhebel 30 insbesondere auch als Rüttelsicherung und verhindert ein Verschieben des Lagers.

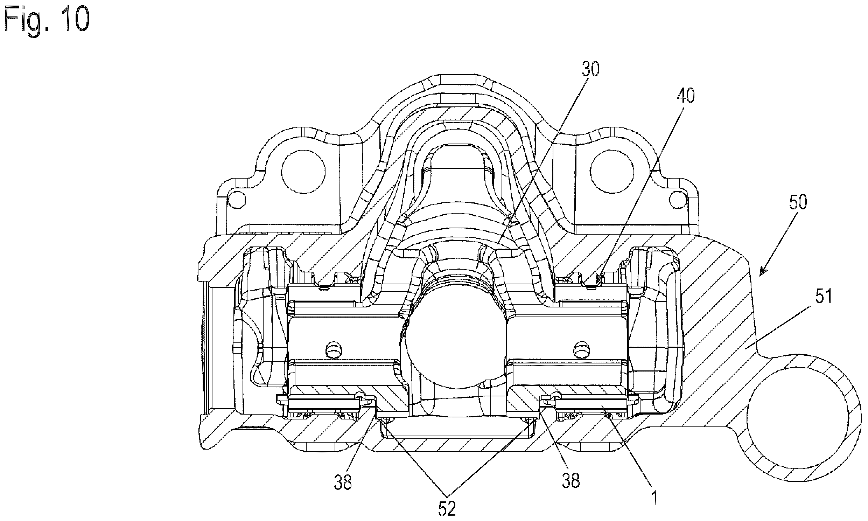

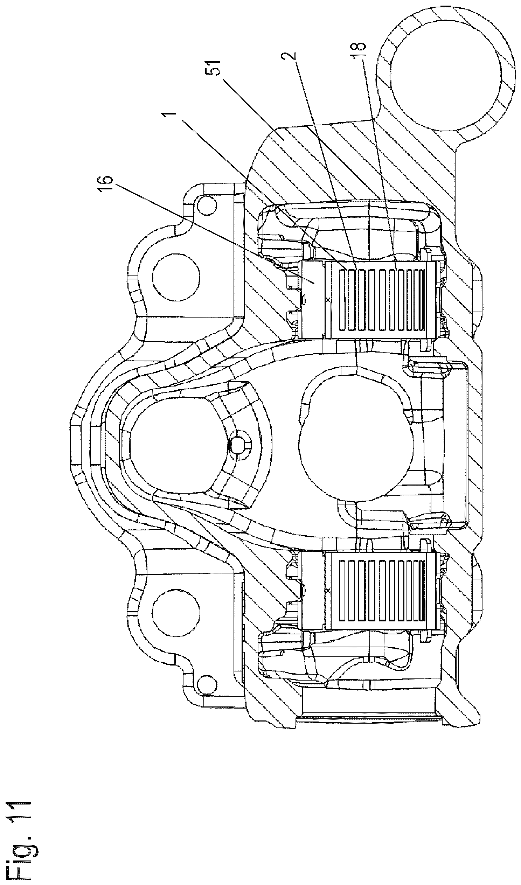

Fig. 10 und 11 offenbart sodann eine erfindungsgemäße Zuspannvorrichtung 50 einer Scheibenbremse. Die Zuspannvorrichtung umfasst einen Bremssattel 51 und die vorbeschriebene darin eingesetzte Schwenkhebelanordnung 40 aus einem Schwenkhebel 30 und einem Schwenklager 1.

Im Bremssattel 51 ist einer oder mehrere in den Figuren verdeckte Achsschenkel angeordnet. Weiterhin ist eine Vertiefung 52 zur Aufnahme der Führungshörner 39 während der Schwenkbewegung im Bremssattel 51 angeordnet. Die Vertiefung 52 weist randseitige Führungsflächen auf, welche mit den Führungsflächen 38 korrespondieren und dadurch den Schwenkhebel 30 beim Ausführen der Bewegung in seiner Position zu sichern.

Nachfolgend werden nochmals einige Besonderheiten der vorliegenden Erfindung im Detail beschrieben.

Der Führungsflügels 21 verfügt somit funktional über einen Rückführungsanschlag, welcher nicht als Nut ausgeführt, sondern als Anschlagfläche 10 ausgebildet ist.

Dabei handelt es sich um eine lediglich einseitig-ausgebildete Anschlagfläche 10 an dem Führungsflügel 21 vorzugsweise mit einem Längsverlauf parallel zur Schwenkachse 36 des Schwenklagers 1.

Der zur Anschlagfläche 10 korrespondierende Gegenanschlag am Schwenkhebel 30 bildet das Rückführungselement 34, welches den lediglich einseitigen Anschlag der Rückführung ermöglicht. Dieses Rückführungselement 34 kann mit geringstem Aufwand durch das Ende einer Freifräsung, insbesondere durch Bearbeitung durch Zirkularfräsen, ausgeführt sein. Auch denkbar wäre allerdings auch eine Anformung ohne Bearbeitung durch Fräsen oder durch Anfügen eines Zusatzbauteils an den Schwenkhebel.

Das vorbeschriebene Rückführungselement besonders bevorzugt direkt im Schwenkhebel integriert, durch die Kombination von seitlicher Hebelführung mittels Führungsflächen zum Bremssattel und Nutzung des Auslaufs der Führungsflächen für die Rückführung des Schwenklagerkäfigs.

Somit ist kein zusätzliches Bauteil am Hebel für die Käfigrückführung erforderlich.

Umgekehrt kann die Rückführung über den Führungsflügel direkt in den Käfig integriert sein.

Durch den lediglich einseitigen Anschlag kann die der Anschlagfläche 10 gegenüberliegende Fläche des Führungsflügels 21 als eine nach hinten zulaufende Versteifung ausgeführt werden, was eine zusätzliche Stabilität der Rückführung insgesamt ermöglicht.

Die Haltestege 3 des Schwenklagers sind überdies sind nur einseitig angebracht, was eine konstruktive Vereinfachung, sowie eine Vereinfachung bei der Herstellung des Schwenklagers, insbesondere bei einem Kunststoffspritzvorgang bedeutet.

Die Rastleisten 9 zur Sicherstellung der Verbindung Wälzkörperkäfig 2 mit Wälzkörpern 18 und Lagerschale 16 sind vorzugsweise als federnder Hinterschnitt ausgeführt, also als federnde Schnappnasen.

Der Schwenkhebel 30 ist beidseitig mit einem der vorbeschriebenen Wälzkörperlager ausgebildet. Dabei weist gemäß Fig. 10 und 11 jede Seite nur eine seitliche Abstützung der Lagerschale 16 im Bremssattel 51 auf, wobei die Anordnung der Abstützpunkte diagonal zueinander angeordnet sind.

### Bezugszeichenliste

- 1: Schwenklager
- 2: Wälzkörperkäfig
- 3: Haltesteg
- 4: Lagertasche
- 5a: Seitenborde
- 5b: Seitenborde
- 6a: Führungsmittel
- 6b: Führungsmittel
- 7: Rastelement
- 9: Rastleiste
- 10: Anschlagfläche
- 11: Flügelversteifung
- 12: Endfläche
- 13: Endfläche
- 15: Aussparung
- 16: Lagerschale
- 17: Aussparungen
- 18: Wälzkörper
- 19: Nase
- 20: Vertiefungsrillen
- 21: Führungsflügel
- 22: Außenfläche
- 24: Nase
- 25: Endsegment
- 26: Mittelsegment

- 30: Schwenkhebel
- 31: Hebelelement
- 32: Lagerfläche
- 33: Laufbahn
- 34: Rückführungselement
- 35: Innenlagerfläche
- 36: Drehachse
- 37: Aufnahme
- 38: Führungsfläche
- 39: Führungshorn
- 40: Schwenkhebelanordnung
- 50: Zuspannvorrichtung
- 51: Bremssattel
- 52: Vertiefung

- A: Schwenkachse

## Patentansprüche

1. Schwenklager (1) zur Lagerung eines Schwenkhebels (30) einer Zuspannvorrichtung (50) einer Scheibenbremse, wobei das Schwenklager (1) eine bogenförmige Lagerschale (16) und einen darauf verschwenkbar-geführte Wälzlagerkäfig (2) aufweist, **dadurch gekennzeichnet, dass** der Wälzlagerkäfig (2) zumindest einen axial zur Schwenkachse (A) hervorstehenden Führungsflügel (21) aufweist, welcher lediglich einseitig eine sich axial-erstreckende Anschlagfläche (10) zur Rückführung des Wälzkörperkäfigs (2) aufweist.

2. Schwenklager nach Anspruch 1, **dadurch gekennzeichnet, dass** die Anschlagfläche (10) als Kante des Führungsflügels (21) ausgebildet ist.

3. Schwenklager nach Anspruch 1 oder 2, **dadurch gekennzeichnet, dass** die der Anschlagfläche (10) entgegengesetzten Kante des Führungsflügels (21) als Flügelversteifung (11) mit bogenförmigen Längsverlauf ausgebildet ist.

4. Schwenklager nach einem der vorhergehenden Ansprüche, **dadurch gekennzeichnet, dass** die Lagerschale (16) als Blechstreifen ausgebildet ist, wobei die Lagerschale (16) über einen durchgängigen Bereich von mehr als 80% seiner Längsersteckung in einer Bogenebene verläuft.

5. Schwenklager nach einem der vorhergehenden Ansprüche, **dadurch gekennzeichnet, dass** die Lagerschale (16) mit dem Wälzkörperkäfig (2) verrastet ist.

6. Schwenklager nach einem der vorhergehenden Ansprüche, **dadurch gekennzeichnet, dass** der Wälzkörperkäfig (2) eines oder mehrere Rastelemente (7), insbesondere eines oder mehrere federnde Rastleisten (9), aufweist, welche mit einem korrespondierenden Rastelement der Lagerschale (16), insbesondere einer oder mehreren Vertiefungsrillen (20), verrastet ist.

7. Schwenklager nach einem der vorhergehenden Ansprüche, **dadurch gekennzeichnet, dass** der Führungsflügel (21) einstückig mit dem Wälzkörperkäfig (2) ausgebildet ist.

8. Schwenklager nach einem der vorhergehenden Ansprüche, **dadurch gekennzeichnet, dass** der Wälzkörperkäfig (2) Lagertaschen (4) zur Lagerung von Wälzkörpern (18), insbesondere von Lagernadeln, aufweist, wobei die Lagertaschen (4) Haltestege (3) zur Halterung der Wälzkörper (18) aufweist, welche lediglich einseitig an einer Lagertasche (4) angeordnet sind.

9. Schwenkhebelanordnung (40) umfassend einen Schwenkhebel (30) und ein Schwenklager (1), vorzugsweise ein Schwenklager (1) nach einem der vorhergehenden Ansprüche, wobei das Schwenklager (1) eine bogenförmige Lagerschale (16) und einen darauf verschwenkbar-geführte Wälzlagerkäfig (2) aufweist, **dadurch gekennzeichnet, dass** der Wälzlagerkäfig (2) einen axial zur Schwenkachse (A) hervorstehenden Führungsflügel (21) aufweist, mit einer Anschlagfläche (10), welche gemeinsam mit einem am Schwenkhebel (30) ausgebildeten korrespondierenden Rückführungselement (34) einen lediglich einseitigen Anschlag zur Rückführung des Wälzlagerkäfigs (2) aufweist.

10. Schwenkhebelanordnung nach Anspruch 9, **dadurch gekennzeichnet, dass** das Rückführungselement (34) als ein zunehmend verjüngender radialer Vorsprung ausgebildet ist.

11. Schwenkhebelanordnung nach Anspruch 10, **dadurch gekennzeichnet, dass** das Rückführungselement (34) eine zur Verjüngung hin geschwungen auslaufende Kontur aufweist.

12. Schwenkhebelanordnung nach einem der vorhergehenden Ansprüche,
**dadurch gekennzeichnet, dass** das Rückführungselement (34) am Ende einer Führungsfläche (38) zur Führung des Schwenkhebels (30) innerhalb eines Bremssattels (51) angeordnet und vorzugsweise einstückig, insbesondere monolithisch, mit dem Rest des Schwenkhebels (30) ausgebildet ist.

13. Schwenkhebelanordnung nach einem der vorhergehenden Ansprüche,
**dadurch gekennzeichnet, dass** das Rückführungselement (34) als Fräsauslauf ausgebildet ist.

14. Zuspannvorrichtung (50) einer Scheibenbremse umfassend einen Bremssattel (51) und eine Schwenkhebelanordnung (40) nach einem der vorhergehenden Ansprüche, welche sich in einer Kontur im Bremssattel (51) abstützt.

15. Zuspannvorrichtung nach Anspruch 14, **dadurch gekennzeichnet, dass** die Führungsfläche (38) Teil eines Führungshorns (39) oder benachbart zu diesem angeordnet ist, welches bei Ausführen der Schwenkbewegung in eine Ausnehmung (52) innerhalb des Bremssattels (51) eintaucht.

16. Zuspannvorrichtung nach Anspruch 14 oder 15, **dadurch gekennzeichnet, dass** jede Seite des Schwenkhebels (30) lediglich eine seitliche Abstützung der Lagerschale (1) im Bremssattel (51) aufweist, wobei die Anordnung der Abstützpunkte diagonal zueinander angeordnet sind.
